# FASCICULE DE BREVET EUROPEEN

(11) **EP 3 615 202 B1**
(45) Date de publication et mention de la délivrance du brevet: **30.09.2026**
(21) Numéro de dépôt: 18724952.9
(22) Date de dépôt: 20.04.2018
(51) Int. Cl.: B01J 20/285, B01J 20/32, B01D 15/08

(54) **PROCÉDÉ DE FABRICATION D'UNE COLONNE CHROMATOGRAPHIQUE ET PROCÉDÉ D'EXTRACTION ASSOCIÉS**
VERFAHREN ZUR HERSTELLUNG EINER CHROMATOGRAFIESÄULE UND ZUGEHÖRIGES EXTRAKTIONSVERFAHREN
PROCESS FOR MANUFACTURING A CHROMATOGRAPHY COLUMN AND ASSOCIATED EXTRACTION PROCESS

(30) Priorité: 25.04.2017 FR 1753589
(43) Date de publication de la demande: 04.03.2020
(73) Titulaire: Commissariat à l'Energie Atomique et aux Energies Alternatives, 75015 Paris (FR)
(72) Inventeur: LOSNO, Marion, 75014 Paris (FR); MARIET, Clarisse, 92120 Montrouge (FR); BRENNETOT, René, 91470 Limours en Hurepoix (FR)
(74) Mandataire: Santarelli
(86) Numéro de dépôt international: PCT/FR2018/050996
(87) Numéro de publication internationale: WO 2018/197789

(56) Documents cités:
- DE-A1- 102008 050 588
- LOSNO MARION ET AL: "Microsystems for Anion Exchange Separation of Radionuclides in Nitric Acid Media", PROCEDIA CHEMISTRY, ELSEVIER, AMSTERDAM, NL, vol. 21, 1 December 2016 (2016-12-01), pages 446 - 452, XP029809398, ISSN: 1876-6196, DOI: 10.1016/J.PROCHE.2016.10.062
- HORWITZ E P ET AL: "Separation and preconcentration of actinides from acidic media by extraction chromatography", ANALYTICA CHIMICA ACTA, ELSEVIER, AMSTERDAM, NL, vol. 281, no. 2, 10 September 1993 (1993-09-10), pages 361 - 372, XP028084289, ISSN: 0003-2670, [retrieved on 19930910], DOI: 10.1016/0003-2670(93)85194-O

## Description

### DOMAINE TECHNIQUE

La présente invention se rapporte à un procédé de fabrication d'une colonne de chromatographie, notamment d'une colonne de chromatographie d'extraction, comprenant une phase stationnaire monolithique, cette phase stationnaire monolithique étant à base de (méth)acrylates.

L'invention se rapporte également à un procédé d'extraction d'éléments contenus dans une solution aqueuse acide, ce procédé d'extraction mettant en œuvre une colonne de chromatographie fabriquée par le procédé précédent.

### ÉTAT DE LA TECHNIQUE ANTÉRIEURE

La chromatographie d'extraction, également appelée chromatographie gravitaire, est une technique de chimie séparative qui permet d'extraire et/ou d'analyser les éléments présents dans un milieu liquide.

Cette technique présente l'avantage de combiner la sélectivité de l'extraction liquide-liquide avec la facilité de manipulation qu'offre une colonne de chromatographie.

Actuellement, les analyses par chromatographie d'extraction requièrent la mise en œuvre de plusieurs étapes de concentration, de séparation et de purification. Ces étapes peuvent comporter non seulement des risques chimiques, par exemple par la manipulation d'acides ou de solvants, mais également des risques radiologiques, par exemple lorsque les milieux à analyser contiennent des radionucléides.

La multiplicité des étapes et les risques chimiques et/ou radiologiques associés impliquent des durées de traitement des échantillons relativement longues ainsi que le respect de contraintes liées à la sécurité, par exemple la mise en œuvre des étapes mentionnées ci-dessus dans des enceintes adaptées telles que des boîtes à gants.

Le développement de systèmes miniaturisés, également appelés "microsystèmes" ou "laboratoires sur puce" (en anglais, "lab-on-chip" ou LOC), a permis d'améliorer significativement la réalisation pratique d'analyses d'éléments à risques chimiques et/ou radiologiques. De tels systèmes miniaturisés intègrent plusieurs opérations complexes sur une plaquette de la dimension d'une carte de crédit.

La réduction d'échelle de ces systèmes apporte de nombreux avantages.

Elle permet tout d'abord de diminuer les volumes de réactifs et d'échantillons à traiter et, par conséquent, de diminuer le risque encouru par l'opérateur en cas de manipulation de produits dangereux. Elle permet également d'augmenter les cinétiques d'échange et d'assurer un meilleur contrôle des écoulements, conduisant ainsi à une efficacité et une rapidité accrues des extractions et analyses. De tels systèmes miniaturisés pouvant, en outre, être parallélisés, ils permettent de gérer un flux important d'échantillons tout en réduisant les temps d'analyse et de manipulation.

Pour permettre des extractions performantes, les phases stationnaires mises en œuvre dans ces microsystèmes de chromatographie d'extraction doivent être adaptées, en particulier pour s'intégrer dans ces microsystèmes qui peuvent être de taille variable et/ou pour résister aux pressions qui peuvent s'exercer dans les colonnes, en l'espèce des microcanaux et capillaires.

Différents types de phases stationnaires destinées à équiper ces microsystèmes de chromatographie d'extraction sont proposés à ce jour, parmi lesquels les phases stationnaires de type particulaire ou de type monolithique.

Les phases stationnaires particulaires sont, comme leur nom l'indique, formées par des particules, par exemple en polymères organiques ou en oxyde de silice, ces matériaux étant fonctionnalisés.

Cette fonctionnalisation peut notamment être réalisée par imprégnation, comme décrit dans la publication de E.P. Horwitz et al. ("Separation and preconcentration of actinides from acidic media by extraction chromatography", Analytica Chimica Acta, 1993, 281, 361-372), référencée **[1]** à la fin de la présente description. Dans cette publication **[1],** l'imprégnation de la phase stationnaire particulaire par un mélange d'extractants est réalisée à l'échelle macroscopique, préalablement à l'introduction de cette phase stationnaire particulaire imprégnée dans la colonne de chromatographie.

Il faut toutefois noter que le remplissage de microcanaux par une phase stationnaire particulaire imprégnée est non seulement laborieux mais également peu reproductible. Il est, en particulier, difficile de réaliser un lit de particules qui soit uniforme et stable. De plus, un tel remplissage requiert l'insertion de frittés aux extrémités du microcanal. Or, les frittés peuvent être à l'origine de la formation de bulles d'air et/ou de phénomènes d'adsorption de solutés au cours des analyses. Tous ces éléments génèrent des problèmes de reproductibilité non négligeables pour les séparations chromatographiques.

En plus des difficultés liées au remplissage de microcanaux et à l'utilisation de frittés, les séparations mettant en œuvre des phases stationnaires particulaires se déroulent séquentiellement, par changement de la composition de la phase liquide éluante. Les éléments à séparer sont ainsi successivement élués, en fonction du changement de la composition de la phase liquide éluante.

On constate toutefois que de tels écoulements sont lents et que les extractions conduites sur ces phases stationnaires particulaires recourent à d'importantes quantités de réactifs.

Parmi les autres types de phases stationnaires proposés à ce jour, les phases stationnaires formées par des monolithes organiques, appelées dans la suite de la présente description phases stationnaires monolithiques, sont particulièrement intéressantes, notamment pour réduire la durée des extractions ainsi que les quantités de réactifs à mettre en œuvre pour les réaliser.

On peut, par exemple, citer la publication de M. Losno et al. ("Microsystems for Anion Exchange Separation of Radionuclides in Nitric Acid Media", Procedia Chemistry, 21, 2016, 446-452) ou encore le document DE 10 2008 050 588 A1 qui décrivent des phases stationnaires monolithiques destinées à équiper des colonnes de faible diamètre intérieur.

Ces phases stationnaires monolithiques sont classiquement formées par une structure poreuse tridimensionnelle composée de nodules interconnectés et fonctionnalisée en fonction de la nature de l'extraction à réaliser.

Cette structure poreuse tridimensionnelle peut notamment être obtenue par polymérisation radicalaire d'un ou de plusieurs monomères. Parmi les monomères disponibles pour la préparation de phases stationnaires monolithiques, on peut notamment citer les monomères d'esters (méth)acryliques. Ces monomères ont l'avantage de présenter une grande diversité de fonctions disponibles pour permettre une fonctionnalisation de la structure poreuse tridimensionnelle qui soit adaptée à l'extraction souhaitée.

Le procédé de préparation de phases stationnaires monolithiques à base de (méth)acrylates est, en outre, de mise en œuvre particulièrement aisée. Ce procédé comprend les étapes suivantes :
(a) la préparation d'une composition polymérisable,
(b) l'introduction de cette composition dans un capillaire ou un microcanal, et
(c) la polymérisation *in situ* de la composition polymérisable.

La composition polymérisable comprend un ou plusieurs monomères d'ester, un ou plusieurs agents porogènes et un amorceur radicalaire.

Après introduction de la composition polymérisable dans le capillaire ou le microcanal, on procède à la polymérisation *in situ* de cette composition, par initiation thermique ou photochimique, l'initiation photochimique présentant l'avantage d'être nettement plus rapide que l'initiation thermique et, en outre, localisable.

Différentes méthodes existent pour fonctionnaliser des phases stationnaires monolithiques à base de (méth)acrylates.

Une première méthode consiste à réaliser une fonctionnalisation chimique et thermique. Toutefois, la fonctionnalisation est souvent limitée à des groupements du type amine secondaire, tertiaire ou ammonium quaternaire. Or, la fonctionnalisation par de tels groupements n'est, en outre, pas appropriée pour réaliser des extractions à partir de solutions comprenant de l'acide nitrique à de fortes concentrations.

Une deuxième méthode consiste à réaliser une fonctionnalisation photochimique. Toutefois, cette deuxième méthode n'est pas nécessairement envisageable pour toute géométrie de capillaire ou de microcanal.

Une troisième méthode consiste à réaliser une fonctionnalisation par imprégnation, soit par voie sèche, soit par voie humide.

L'imprégnation par voie sèche consiste à imprégner la phase stationnaire par trempage de cette dernière dans un mélange comprenant un extractant et un diluant volatil. Le diluant est ensuite éliminé par évaporation. L'extractant, qui reste seul imprégné sur la phase stationnaire, permet la fonctionnalisation de cette dernière.

Dans ce qui précède et dans ce qui suit, on entend :
- par "extractant", toute substance principalement responsable du transfert d'un soluté d'une phase à une autre phase, et
- par "diluant" ou "solvant", toute substance capable de disperser une autre substance, au sein d'une même phase.

Toutefois, cette technique d'imprégnation par voie sèche ne peut être envisagée pour imprégner une phase stationnaire monolithique disposée dans un capillaire ou un microcanal. En effet, l'évaporation du diluant n'est pas réalisable à température ambiante. Par ailleurs, l'augmentation de la température qui permettrait cette évaporation du diluant entraînerait une dégradation de la structure poreuse tridimensionnelle de la phase stationnaire en créant des fissurations.

L'imprégnation par voie humide consiste à imprégner la phase stationnaire par trempage de cette dernière dans un mélange comprenant un extractant et un premier diluant. Ce premier diluant est ensuite éliminé par lavage au moyen d'un second diluant capable de solubiliser le premier diluant (mais pas l'extractant) et de l'éluer. Les premier et second diluants sont alors éliminés de la phase stationnaire monolithique imprégnée par centrifugation, décantation ou filtration, l'extractant restant imprégné sur la phase stationnaire apportant la fonctionnalisation à cette dernière.

Toutefois, cette technique d'imprégnation par voie humide n'est pas non plus envisageable pour imprégner une phase stationnaire monolithique disposée dans un capillaire ou un microcanal. En effet, à cette échelle, lors de l'étape de lavage, le second diluant entraîne l'extractant, qui est donc élué concomitamment avec le premier diluant.

Le but de la présente invention est, par conséquent, de pallier les inconvénients de l'art antérieur et de proposer un procédé de fabrication d'une colonne de chromatographie, en particulier une colonne de chromatographie d'extraction, cette colonne comprenant une phase stationnaire monolithique à base de (méth)acrylates et fonctionnalisée, cette colonne de chromatographie étant destinée à être intégrée dans des microsystèmes de chimie séparative. Le procédé selon l'invention doit être de mise en œuvre relativement aisée et permettre de fabriquer des colonnes, du type capillaires ou microcanaux, qui soient résistantes aux pressions s'exerçant dans les colonnes de ces microsystèmes, qui ne requièrent pas la mise en place de frittés et qui permettent la reproductibilité des séparations et/ou extractions chromatographiques.

Un autre but de l'invention consiste à proposer, de manière plus générale, un procédé de préparation d'une phase stationnaire monolithique à base de (méth)acrylates qui ne soit pas limitée en termes de fonctionnalisation mais puisse, au contraire, être fonctionnalisée à façon, qui soit résistante de manière à permettre l'extraction d'éléments contenus dans des solutions concentrées d'acides, telles que des solutions comprenant de l'acide nitrique ou chlorhydrique à de fortes concentrations, et qui puisse également être envisagée pour toute géométrie de capillaire ou de microcanal.

### EXPOSÉ DE L'INVENTION

Les buts précédemment énoncés ainsi que d'autres sont atteints, en premier lieu, par un procédé de fabrication d'une colonne de chromatographie d'extraction.

Selon l'invention, et conformément à la revendication 1, ce procédé comprend les étapes (1) et (2) suivantes :
(1) une préparation d'une phase stationnaire monolithique du type précité, c'est-à-dire par un procédé comprenant les étapes (a) à (c) suivantes :
   (a) la préparation d'une composition polymérisable,
   (b) l'introduction de la composition polymérisable dans le volume intérieur de la colonne, et
   (c) la polymérisation de la composition polymérisable,
   la composition polymérisable comprenant :
   - un premier monomère (méth)acrylate choisi parmi le diméthacrylate d'éthylène glycol, le diacrylate de 1,4-butanediol, le diméthacrylate de triéthylène glycol et le triméthacrylate de triméthylolpropane,
   - un deuxième monomère méth(acrylate) choisi parmi le méthacrylate d'allyle, le méthacrylate de glycidyle, le méthacrylate de lauryle, le méthacrylate de butyle, le méthacrylate de 2-hydroxyéthyle, le di(méth)acrylate de polyéthylène glycol, le méthacrylate de glycidyle et de bisphénol A et l'acrylate d'hexyle,
   - un ou plusieurs agents porogènes, et
   - un amorceur radicalaire ; et
(2) une mise en contact de la phase stationnaire monolithique préparée à l'étape (1) avec une phase constituée par un extractant ou par un mélange d'extractants, l'extractant ou le mélange d'extractants se présentant sous forme liquide, moyennant quoi on obtient l'imprégnation, par le ou les extractants, de la phase stationnaire monolithique,
l'extractant étant choisi parmi le phosphate de tri-*n*-butyle, l'oxyde d'octylphényl-N,N-diisobutylcarbamoylméthylphosphine, le diamylamyl phosphonate, le p-amino-N,N-dihexyl acétamide, l'acide alpha-hydroxyisobutyrique, le di-bis-(2-éthylhexyl)malonamide, le di-2-éthyhexyl acétylamide, le di-2-éthylhexyl butyramide, le di-2-éthyhexyl isobutyramide, le diglycolamide, l'acide di-isodécylphosphorique, le N,N'-diméthyl-N,N'-dibutyl tétradécyl malonamide, le N,N'-diméthyl-N,N'-dioctyl-2-(2-hexyloxy-éthyl)-malonamide, le 4-éthoxy-N,N-dihexyl-butanamide, l'acide bis-2-éthylhexyl phosphorique, l'acide N-(2-hydroxyéthyl)-éthylènediamine triacétique, le N,N,N',N'-tétra-2-éthylhexyl diglycolamide, le tripodal diglycolamide, le N,N,N',N'-tétraoctyl diglycolamide, les phosphates de trialkyle, les éther-couronnes et les calixarènes, l'extractant étant, avantageusement, le phosphate de tri-n-butyle, le diamylamyl phosphonate ou un mélange le phosphate de tri-*n*-butyle et d'oxyde d'octylphényl-*N,N-*diisobutylcarbamoylméthylphosphine.

Le choix de ces premier et deuxième monomères (méth)acrylate, en combinaison avec le ou les agents porogènes et l'amorceur radicalaire, permet de préparer, de manière aisée, une phase stationnaire monolithique présentant une structure poreuse tridimensionnelle facilement fonctionnalisable et chimiquement résistante, en particulier aux solutions concentrées d'acides.

Ce procédé, qui comprend les étapes (a), (b) et (c), permet de préparer une phase stationnaire monolithique dans le volume intérieur de la colonne de chromatographie, l'étape (c) de polymérisation étant alors réalisée *in situ.*

Le procédé de fabrication selon l'invention peut avantageusement s'appliquer à tout type de colonne, en particulier à des colonnes capillaires ainsi qu'à des microcolonnes de faibles dimensions et ce, quelle que soit la géométrie de ces colonnes.

L'étape (a) de préparation de la composition polymérisable du procédé selon l'invention peut être réalisée par simple mélange des premier et deuxième monomères (méth)acrylates, du ou des agents porogènes et de l'amorceur radicalaire.

Il est précisé que l'expression "monomères (méth)acrylates" couvre aussi bien des monomères acrylates que des monomères méthacrylates.

Comme indiqué précédemment, le premier monomère (méth)acrylate peut être choisi parmi le diméthacrylate d'éthylène glycol (EGDMA), le diacrylate de 1,4-butanediol (BDA), le diméthacrylate de triéthylène glycol (TEGDMA) et le triméthacrylate de triméthylolpropane (TMPTMA).

Dans une variante avantageuse de ce procédé, le premier monomère (méth)acrylate est le diméthacrylate d'éthylène glycol (EGDMA).

Le deuxième monomère (méth)acrylate peut, quant à lui, être choisi parmi le méthacrylate d'allyle (AMA), le méthacrylate de glycidyle (GMA), le méthacrylate de lauryle (LMA), le méthacrylate de butyle (BMA), le méthacrylate de 2-hydroxyéthyle (HEMA), le diacrylate de polyéthylène glycol (PEGDA), le diméthacrylate polyéthylène glycol (PEGDMA), le méthacrylate de glycidyle et de bisphénol A (bis-GMA) et l'acrylate d'hexyle (HA).

Le méthacrylate de glycidyle et de bisphénol A (bis-GMA) correspond au 2,2-bis[4-(2-hydroxy-3-méthacryloxyprop-1-oxy)phényl]-propane (nomenclature IUPAC).

Dans une autre variante avantageuse de ce procédé de fabrication, le deuxième monomère (méth)acrylate est le méthacrylate d'allyle (AMA).

Dans une variante du procédé de fabrication selon l'invention, la proportion massique des premier et deuxième monomères (méth)acrylate, par rapport à la masse totale de la composition polymérisable, est comprise entre 20 %mass et 60 %mass.

De manière plus particulièrement avantageuse, la proportion massique des premier et deuxième monomères (méth)acrylate, par rapport à la masse totale de la composition polymérisable, est comprise entre 30 %mass et 50 %mass.

Il est précisé que l'expression "compris(e) entre ... et ..." qui vient d'être citée et qui est utilisée dans la présente demande doit être comprise comme définissant non seulement les valeurs de l'intervalle, mais également les valeurs des bornes de cet intervalle.

Dans une variante du procédé de fabrication selon l'invention, la proportion massique du premier monomère (méth)acrylate, par rapport à la masse totale de la composition polymérisable, est comprise entre 10 %mass et 30 %mass.

Dans une variante du procédé de fabrication selon l'invention, la proportion massique du deuxième monomère (méth)acrylate, par rapport à la masse totale de la composition polymérisable, est comprise entre 10 %mass et 30 %mass.

La composition polymérisable mise en œuvre dans le procédé selon l'invention comprend un ou plusieurs agents porogènes. Cette composition peut donc ne comprendre qu'un seul agent porogène. À l'inverse, la composition polymérisable peut comprendre deux, trois, voire plus, agents porogènes, le cas échéant, en mélange avec de l'eau.

Les agents porogènes classiquement utilisés pour la préparation de phases stationnaires monolithiques à base de (méth)acrylates sont le méthanol, le 1-propanol, le 2-propanol, le cyclohexanol, le dodécanol, le 1,4-butanediol, l'isooctane, le toluène, l'hexane, le tétrahydrofurane ou encore l'acétonitrile. Comme on le verra ci-après, une faible proportion d'eau peut être ajoutée à ce ou ces agents porogènes.

Dans une variante du procédé de fabrication selon l'invention, la proportion massique du ou des agents porogènes, par rapport à la masse totale de la composition polymérisable, est comprise entre 40 %mass et 80 %mass.

De manière plus particulièrement avantageuse, la proportion massique du ou des agents porogènes, par rapport à la masse totale de la composition polymérisable, est comprise entre 50 %mass et 70 %mass.

Dans une variante avantageuse du procédé de fabrication selon l'invention, la composition polymérisable comprend deux agents porogènes, éventuellement en mélange avec de l'eau.

Dans une variante préférentielle, les deux agents porogènes de la composition polymérisable sont un monoalcool et un diol.

Le monoalcool peut notamment être choisi parmi le méthanol, le 1-propanol, le 2-propanol, le cyclohexanol et le dodécanol.

De préférence, ce monoalcool est le 1-propanol.

Le diol peut notamment être choisi parmi le 1,3-propanediol, le 1,4-butanediol, le 1,5-pentanediol et le 1,6-hexanediol.

De préférence, ce diol est le 1,4-butanediol.

Dans une variante du procédé de fabrication selon l'invention, la proportion massique du ou des monoalcools, par rapport à la masse totale de la composition polymérisable, est comprise entre 25 %mass et 45 %mass.

De manière plus particulièrement avantageuse, la proportion massique du ou des monoalcools, par rapport à la masse totale de la composition polymérisable, est comprise entre 30 %mass et 50 %mass.

Dans une variante du procédé de fabrication selon l'invention, la proportion massique du ou des diols, par rapport à la masse totale de la composition polymérisable, est comprise entre 15 %mass et 35 %mass.

De manière plus particulièrement avantageuse, la proportion massique du ou des diols, par rapport à la masse totale de la composition polymérisable, est comprise 20 %mass et 30 %mass.

Comme mentionné ci-dessus, la composition polymérisable peut comprendre un ou plusieurs agents porogènes, seuls ou bien en mélange avec de l'eau.

Dans une variante du procédé de fabrication selon l'invention, lorsque la composition polymérisable comprend, en outre, de l'eau, cette eau remplace partiellement le ou les diols. Dans une telle variante, la proportion massique d'eau, par rapport à la masse totale de la composition polymérisable, peut aller jusqu'à 15 %mass, la proportion massique du ou des diols étant diminuée en conséquence. En d'autres termes, la proportion massique du ou des diols et de l'eau, par rapport à la masse totale de la composition polymérisable, est comprise entre 15 %mass et 35 %mass.

De manière plus particulièrement avantageuse, la proportion massique d'eau, par rapport à la masse totale de la composition polymérisable, est comprise entre 1 %mass et 12 %mass. Ce faisant, la proportion massique du ou des diols et de l'eau, par rapport à la masse totale de la composition polymérisable, peut être comprise entre 20 %mass et 30 %mass.

La composition polymérisable mise en œuvre dans le procédé selon l'invention comprend également un amorceur radicalaire.

Les amorceurs radicalaires classiquement utilisés pour la préparation de phases stationnaires monolithiques à base de (méth)acrylates sont l'azobisisobutyronitrile (AlBN), la benzophénone, la 2,2-diéthoxyacétophénone (DEA), les *α-*dialkoxyacétophénones, la 2,2-diméthyl-2-hydroxyacétophénone (DARO), les *α-*hydroxyacétophénones, le benzoïne méthyl éther (BME), la 2-méthyl-4'-(méthylthio)-2-morpholino-propiophénone (IRG), les α-alkylaminoacétophénones ou encore la 2,2-diméthoxy-2-phénylacétophénone (DMPA).

Dans une variante du procédé de fabrication selon l'invention, l'amorceur radicalaire de la composition polymérisable est choisi parmi la 2,2-diméthoxy-2-phénylacétophénone (DMPA), la 2,2-diéthoxyacétophénone (DEA), les *α-*dialkoxyacétophénones, la 2,2-diméthyl-2-hydroxyacétophénone (DARO), les *α-*hydroxyacétophénones, la benzoïne méthyl éther (BME), la 2-méthyl-4'-(méthylthio)-2-morpholino-propiophénone (IRG) et les α-alkylaminoacétophénones.

Dans une variante avantageuse de ce procédé, l'amorceur radicalaire est la 2,2-diméthoxy-2-phénylacétophénone (DMAP).

L'étape (c) de polymérisation du procédé selon l'invention est une polymérisation par voie radicalaire en chaîne, initiée par l'amorceur radicalaire.

Cette étape (c) de polymérisation est avantageusement une photopolymérisation, c'est-à-dire une polymérisation réalisée par irradiation de la composition préparée à l'étape (a) au moyen de rayons ultraviolets (UV).

Dans une variante avantageuse du procédé de fabrication selon l'invention, le temps d'irradiation UV est compris entre 5 min et 30 min, ce qui correspond à une cinétique de polymérisation relativement rapide.

Comme indiqué précédemment, le procédé selon l'invention comprend une étape (b) consistant à introduire la composition polymérisable préparée à l'étape (a) dans le volume intérieur d'une colonne de chromatographie, avant de procéder à l'étape (c) de polymérisation de cette composition à l'intérieur de cette colonne (*in situ*).

Le terme de "colonne" peut bien entendu couvrir tout type de colonne de chromatographie. Toutefois, dans le contexte de la présente invention, ce terme couvre plus particulièrement les canaux, les microcanaux et autres capillaires qui sont destinés à équiper les systèmes miniaturisés ou microsystèmes discutés ci-avant.

Ainsi, le procédé de fabrication selon l'invention vise plus particulièrement les colonnes dont le diamètre interne est inférieur ou égal à 5 mm, avantageusement inférieur ou égal à 1 mm, de préférence compris entre 50 µm et 500 µm et, plus préférentiellement, entre 50 µm et 360 µm.

Dans une variante avantageuse du procédé de fabrication selon l'invention, la paroi interne de la colonne est soumise à un prétraitement, apte à créer ou à renforcer l'adhérence de la phase stationnaire monolithique sur la paroi interne, cette étape complémentaire de prétraitement étant mise en œuvre préalablement à l'étape (b).

Dans une autre variante, le procédé de fabrication selon l'invention peut, en outre, comprendre une étape (d) de lavage de la phase stationnaire monolithique telle qu'obtenue à l'issue de l'étape (c). Cette étape (d) de lavage permet d'éliminer les composés de la composition polymérisable n'ayant pas réagi ainsi que le ou les agents porogènes.

Ce lavage peut notamment être réalisé au méthanol ou à l'éthanol.

La présente invention se rapporte à un procédé de fabrication d'une colonne de chromatographie, en particulier d'une colonne de chromatographie d'extraction.

Selon l'invention, et conformément à la revendication 1, ce procédé de fabrication comprend les étapes suivantes :
(1) la préparation d'une phase stationnaire monolithique dans le volume intérieur de la colonne par la mise en œuvre du procédé de préparation tel que défini ci-dessus, et
(2) la mise en contact de la phase stationnaire monolithique préparée à l'étape (1) avec au moins une phase constituée par un extractant ou par un mélange d'extractants, l'extractant ou le mélange d'extractants se présentant sous forme liquide, moyennant quoi on obtient l'imprégnation, par le ou les extractants, de la phase stationnaire monolithique,
l'extractant étant choisi parmi le phosphate de tri-*n*-butyle, l'oxyde d'octylphényl-*N,N-*diisobutylcarbamoylméthylphosphine, le diamylamyl phosphonate, le p-amino-*N,N-*dihexyl acétamide, l'acide alpha-hydroxyisobutyrique, le di-bis-(2-éthylhexyl)malonamide, le di-2-éthyhexyl acétylamide, le di-2-éthylhexyl butyramide, le di-2-éthyhexyl isobutyramide, le diglycolamide, l'acide di-isodécylphosphorique, le N,N'-diméthyl-N,N'-dibutyl tétradécyl malonamide, le N,N'-diméthyl-N,N'-dioctyl-2-(2-hexyloxy-éthyl)-malonamide, le 4-éthoxy-N,N-dihexyl-butanamide, l'acide bis-2-éthylhexyl phosphorique, l'acide N-(2-hydroxyéthyl)-éthylènediamine triacétique, le N,N,N',N'-tétra-2-éthylhexyl diglycolamide, le tripodal diglycolamide, le N,N,N',N'-tétraoctyl diglycolamide, les phosphates de trialkyle, les éther-couronnes et les calixarènes, l'extractant étant, avantageusement, le phosphate de tri-n-butyle, le diamylamyl phosphonate ou un mélange le phosphate de tri-n-butyle et d'oxyde d'octylphényl-*N,N-*diisobutylcarbamoylméthylphosphine.

Dans ce procédé de fabrication selon l'invention, l'étape (1) est réalisée par le procédé de préparation tel que défini ci-avant, étant précisé que les caractéristiques avantageuses de ce procédé de préparation, telles que celles relatives aux premier et deuxième monomères (méth)acrylate, agent(s) porogène(s) et amorceur radicalaire, à la leurs proportions massiques respectives et/ou aux étapes (a), (b) et (c), peuvent être prises seules ou en combinaison.

Lors de l'étape (2) de mise en contact de la phase stationnaire monolithique avec au moins un extractant, on réalise l'imprégnation, par voie humide et *in situ,* dans le volume intérieur de la colonne, du ou des extractants dans la structure tridimensionnelle poreuse de cette phase stationnaire. Le ou les extractants sont imprégnés seul(s) dans la phase stationnaire monolithique, en l'absence de diluant ou de tout autre composé.

L'extractant ou le mélange d'extractants ne doit pas dégrader la phase stationnaire monolithique à base de (méth)acrylates et doit, en outre, se présenter sous forme liquide.

Les extractants susceptibles d'être utilisés dans le cadre du procédé de fabrication selon l'invention sont les extractants classiquement utilisés en extraction liquide-liquide et mentionnés ci-dessus.

Le procédé selon l'invention permet donc de fabriquer, très facilement et à façon, une colonne de chromatographie utilisable pour extraire, séparer et/ou analyser les éléments présents dans une solution.

Les colonnes de chromatographie susceptibles d'être obtenues par le procédé selon l'invention peuvent, par conséquent, être de natures très variées et utilisables pour de nombreuses applications, telles que l'analyse et/ou la séparation d'éléments et ce, dans de nombreux domaines comme, par exemple, l'hydrométallurgie ou encore l'analyse environnementale.

Dans le cas où un extractant ne se trouverait pas sous forme liquide, celui-ci est alors dissous au moyen d'un autre extractant, cet autre extractant présentant, de préférence, des affinités d'extraction similaires, voire complémentaires, à celles de l'extractant qui ne se trouve pas sous forme liquide. Si cet autre extractant joue donc bien le rôle d'un diluant, il n'y a pas lieu de l'éliminer, soit par chauffage, soit par élution, ce qui rend le mélange d'extractants ainsi obtenu parfaitement compatible avec les contraintes liées à une imprégnation dans un capillaire ou un microcanal.

Parmi les extractants utilisés, on peut notamment citer le phosphate de tri-*n*-butyle (TBP), l'oxyde d'octylphényl-*N,N*-diisobutylcarbamoylméthylphosphine (CMPO), le diamylamyl phosphonate (DAAP), le p-amino-N,N-dihexyl acétamide (ADHA), l'acide alpha-hydroxyisobutyrique (α-HIBA), le di-bis-(2-éthylhexyl)malonamide (DB2EHM), le di-2-éthyhexyl acétylamide (DEHAA), le di-2-éthylhexyl butyramide (DEHBA), le di-2-éthyhexyl isobutyramide (DEHiBA), le diglycolamide (DGA), l'acide di-isodécylphosphorique (DIDPA), le N,N'-diméthyl-N,N'-dibutyl tétradécyl malonamide (DMDBTDMA), le N,N'-diméthyl-N,N'-dioctyl-2-(2-hexyloxy-éthyl)-malonamide (DMDOHEMA), le 4-éthoxy-N,N-dihexyl-butanamide (EDHBA), l'acide bis-2-éthylhexyl phosphorique (HDEHP), l'acide N-(2-hydroxyéthyl)-éthylènediamine triacétique (HEDTA), le N,N,N',N'-tétra-2-éthylhexyl diglycolamide (T2EHDGA), le tripodal diglycolamide (T-DGA), le N,N,N',N'-tétraoctyl diglycolamide (TODGA), les phosphates de trialkyle (TRPO), les éther-couronnes et les calixarènes. Les calixarènes peuvent être fonctionnalisés par un diglycolamide ; à titre d'exemple, on peut notamment citer le calix[4]arène fonctionnalisé par un diglycolamide (C4DGA).

Les extractants TBP et DAAP, qui présentent l'avantage d'être disponibles sous forme liquide, sont plus particulièrement utilisés pour extraire les actinides, notamment l'uranium(VI) ou encore le thorium(IV).

L'extractant CMPO est un sel et se présente donc sous une forme solide. En conséquence, pour imprégner la phase stationnaire monolithique à base de (méth)acrylates, le CMPO doit être dissous dans un autre extractant.

Le CMPO peut notamment être dissous dans du TBP. Le mélange TBP-CMPO ainsi formé, est également utilisé pour extraire les actinides, dont ceux déjà mentionnés ci-dessus pour l'extractant TBP.

Dans une variante avantageuse du procédé de fabrication selon l'invention, l'extractant est le TBP, le DAAP ou le mélange TBP-CMPO.

Cette étape (2) de mise en contact de la phase stationnaire monolithique avec un ou plusieurs extractants doit permettre une diffusion et une imprégnation du ou des extractants dans tout le volume de la phase stationnaire monolithique à base de (méth)acrylates.

Ainsi, pour optimiser l'imprégnation, l'étape (2) de mise en contact est réalisée par une circulation d'une phase mobile constituée par le ou les extractants sur la phase stationnaire monolithique.

Cette circulation peut notamment être réalisée à un débit compris entre 0,1 mL/h et 1 mL/h et/ou pendant un temps compris entre 1 h et 8 h.

Dans une variante, le procédé de fabrication selon l'invention peut, en outre, comprendre une étape (3) de lavage de la phase stationnaire monolithique imprégnée telle qu'obtenue à l'issue de l'étape (2). Cette étape (3) de lavage permet d'éliminer le ou les extractants qui, introduits en excès, n'ont pas été fixés sur la phase stationnaire monolithique.

Ce lavage peut notamment être réalisé à l'eau distillée.

La présente invention se rapporte, en deuxième lieu, à un procédé d'extraction d'éléments, notamment d'actinides et/ou de lanthanides, d'une solution aqueuse acide S, telle qu'une solution aqueuse acide S comprenant de l'acide nitrique ou de l'acide chlorhydrique.

Selon l'invention, ce procédé d'extraction comprend les étapes suivantes :
(i) au moins une circulation d'une phase mobile constituée par la solution aqueuse acide S sur une phase stationnaire monolithique imprégnée fabriquée par la mise en œuvre du procédé de fabrication tel que défini ci-dessus, puis
(ii) au moins une élution, par une phase mobile constituée par une solution aqueuse éluante, de la phase stationnaire monolithique obtenue à l'issue de l'étape (i), moyennant quoi tout ou partie des éléments sont récupérés dans la solution aqueuse éluante.

Dans ce qui précède et ce qui suit, par l'expression "élément", on entend tout élément chimique répertorié dans le tableau périodique des éléments de Mendeleïev.

Dans ce procédé d'extraction selon l'invention, l'étape (i) met en œuvre une phase stationnaire monolithique à base de (méth)acrylates qui a été obtenue par le procédé de fabrication tel que défini ci-avant, étant précisé que les caractéristiques avantageuses de ce procédé de fabrication, notamment celles relatives aux modalités de mise en œuvre des étapes (1), (2) et, le cas échéant, (3) et/ou aux extractants, peuvent être prises seules ou en combinaison.

Au cours de cette étape (i), se produit l'extraction du ou des éléments qui, parmi ceux contenus dans la solution aqueuse acide S, présentent une affinité avec le ou les extractants imprégnés sur la phase stationnaire monolithique à base de (méth)acrylates.

Le ou les éléments qui ont été extraits lors de l'étape (i) sont ensuite désextraits de la phase stationnaire monolithique par la mise en œuvre de l'étape (ii) qui comprend au moins une élution par une phase mobile constituée par une solution aqueuse éluante. Une telle solution aqueuse éluante peut notamment être une solution aqueuse basique.

Dans une variante de l'invention, la solution aqueuse acide S présente une concentration d'ions H⁺ inférieure ou égale à 10 mol/L.

Cette concentration d'ions H⁺ de la solution aqueuse acide est avantageusement comprise entre 0,1 mol/L et 8 mol/L et, de préférence, comprise entre 1 mol/L et 6 mol/L.

Le procédé d'extraction selon l'invention est de mise en œuvre particulièrement simple et permet d'extraire et de récupérer, de manière sélective, des éléments en fonction de leur affinité avec le ou les extractants imprégnés sur la phase stationnaire monolithique de la colonne de chromatographie.

Ce procédé peut plus particulièrement être mis en œuvre pour extraire des métaux, notamment des actinides et/ou des lanthanides, contenus dans une solution aqueuse acide, telle qu'une solution comprenant de l'acide nitrique, de l'acide chlorhydrique, de l'acide perchlorique, avec ou sans sel relargant (nitrate de lithium ou de sodium ; chlorure de lithium, de sodium ou de potassium ; perchlorate de lithium, de sodium ou de potassium ; ...).

En particulier, les actinides peuvent être choisis parmi l'uranium(VI), le thorium(IV), le curium (III), l'américium (III), le plutonium (III, IV, VI) et le neptunium (IV, V) tandis que les lanthanides peuvent être choisis parmi l'europium(III), le néodyme(III), le cérium(III, IV), le lanthane(III), le dysprosium(III), l'erbium(III), le gadolinium(III), l'holmium(III), le lutécium(III), le praséodyme(Ill), le prométhéum(III), le samarium(III), le terbium(III), le thulium(III) et l'ytterbium(III).

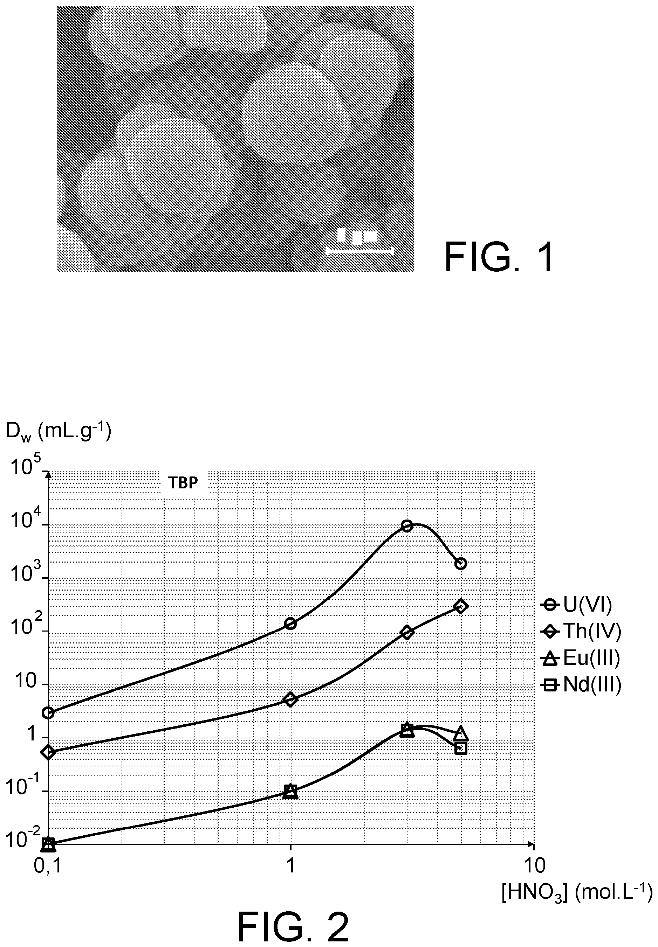

D'autres caractéristiques et avantages de l'invention apparaîtront à la lecture du complément de description qui suit, qui est fait en référence aux figures 1 à 7 annexées, et qui se rapporte à un exemple de préparation de phases stationnaires monolithiques à base de méthacrylates, à des exemples d'imprégnation de telles phases stationnaires monolithiques ainsi qu'à des exemples d'extraction permettant d'illustrer les performances de telles phases stationnaires monolithiques imprégnées dans des procédés d'extraction et de récupération d'actinides et de lanthanides initialement contenus dans différentes solutions aqueuses comprenant de l'acide nitrique.

Bien entendu, ces exemples ne sont donnés qu'à titre d'illustration de l'objet de l'invention et ne constituent, en aucun cas, une limitation de cet objet.

### BRÈVE DESCRIPTION DES DESSINS

La figure 1 correspond à un cliché pris au moyen d'un microscope électronique à balayage (MEB) de la phase stationnaire monolithique préparée conformément au protocole décrit dans le chapitre 1.1. ci-après.
La figure 2 illustre les courbes traduisant l'évolution des coefficients de partage, notés D_{w} et exprimés en mL/g, de quatre radionucléides, notés U(VI), Th(IV), Eu(III) et Nd(III)), après extraction, sur des phases stationnaires monolithiques conformes à l'invention et imprégnées de TBP, de solutions aqueuses acides S comprenant ces radionucléides et de l'acide nitrique, en fonction de la concentration molaire d'acide nitrique, notée [HNO₃] et exprimée en mol/L, dans ces solutions S.

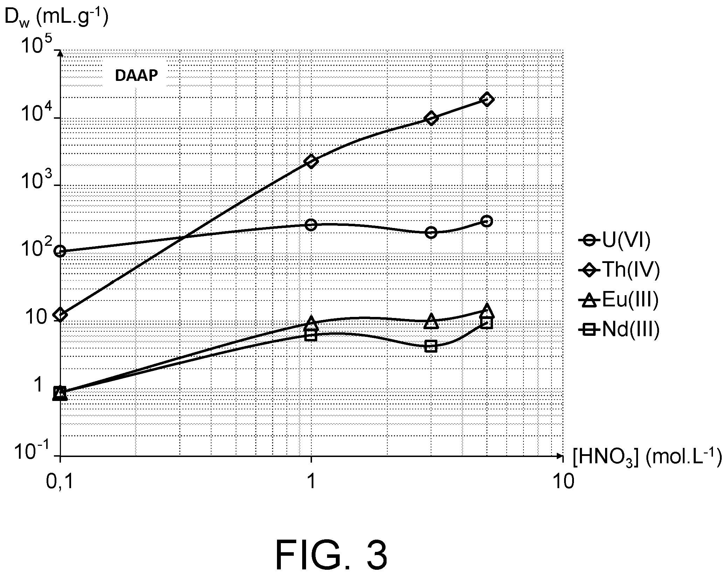

La figure 3 illustre les courbes traduisant l'évolution des coefficients de partage, notés D_{w} et exprimés en mL/g, de quatre radionucléides, notés U(VI), Th(IV), Eu(III) et Nd(III), après extraction, sur des phases stationnaires monolithiques conformes à l'invention et imprégnées de DAAP, de solutions aqueuses acides S comprenant ces radionucléides et de l'acide nitrique, en fonction de la concentration molaire d'acide nitrique, notée [HNO₃] et exprimée en mol/L, dans ces solutions S.

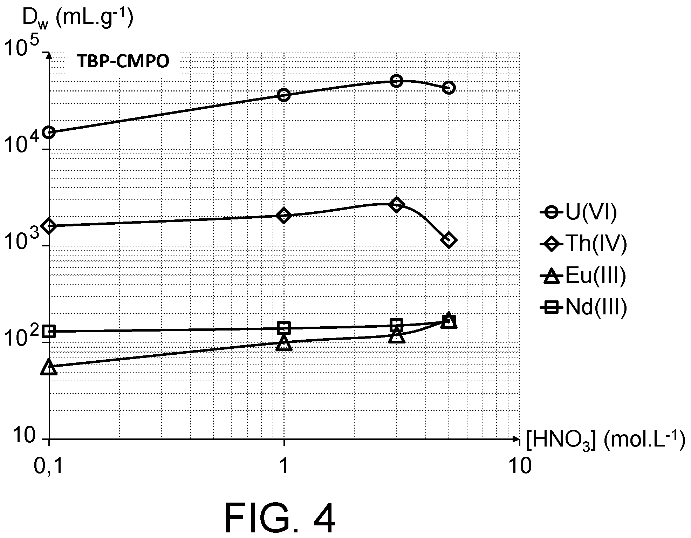

La figure 4 illustre les courbes traduisant l'évolution des coefficients de partage, notés D_{w} et exprimés en mL/g, de quatre radionucléides, notés U(VI), Th(IV), Eu(III) et Nd(III), après extraction, sur des phases stationnaires monolithiques conformes à l'invention et imprégnées d'un mélange TBP-CMPO, de solutions aqueuses acides S comprenant ces radionucléides et de l'acide nitrique, en fonction de la concentration molaire d'acide nitrique, notée [HNO₃] et exprimée en mol/L, dans ces solutions S.

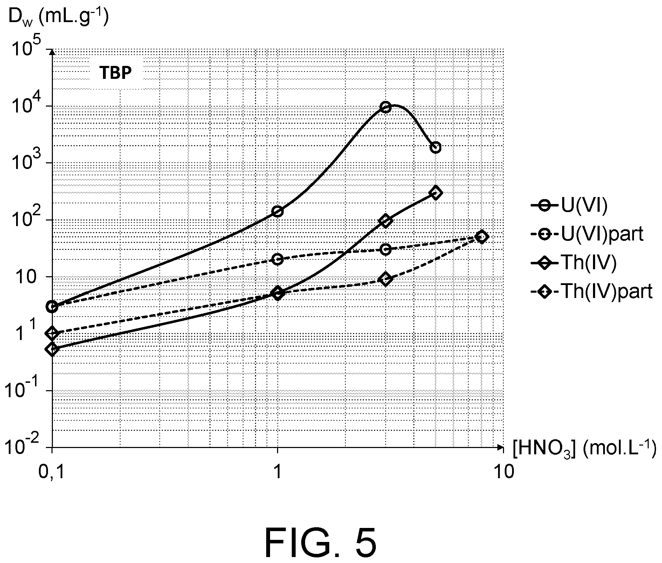

La figure 5 reproduit les courbes de la figure 2 relatives à l'évolution des coefficients de partage D_{w} de U(VI) et Th(IV) en fonction de la concentration molaire d'acide nitrique [HNO₃] des solutions aqueuses acides S et intègre des courbes relatives à cette même évolution des coefficients de partage D_{w}, notés U(VI)part et Th(IV) part, tels qu'indiqués, dans l'art antérieur, pour des extractions, sur des phases stationnaires commercialement disponibles et imprégnées de TBP, de solutions aqueuses acides comprenant des radionucléides U(VI) et Th(IV) et des concentrations variables d'acide nitrique.

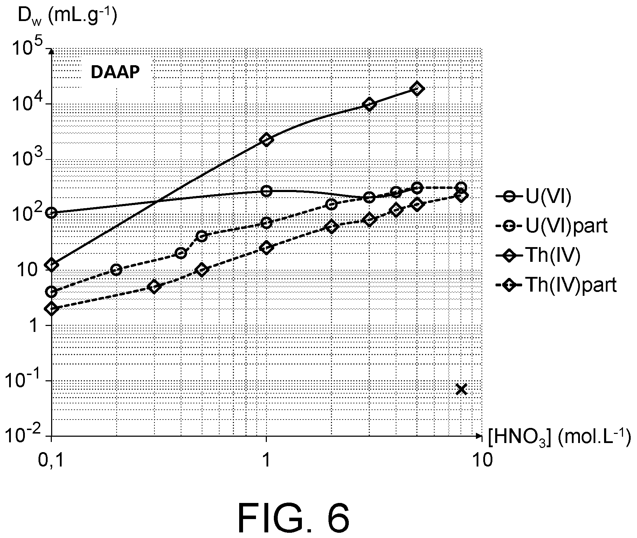

La figure 6 reproduit les courbes de la figure 3 relatives à l'évolution des coefficients de partage D_{w} de U(VI) et Th(IV) en fonction de la concentration molaire d'acide nitrique [HNO₃] des solutions aqueuses acides S et intègre des courbes relatives à cette même évolution des coefficients de partage D_{w}, notés U(VI)part et Th(IV)part, tels qu'indiqués, dans l'art antérieur, pour des extractions, sur des phases stationnaires commercialement disponibles et imprégnées de DAAP, de solutions aqueuses acides comprenant des radionucléides U(VI) et Th(IV) et des concentrations variables d'acide nitrique.

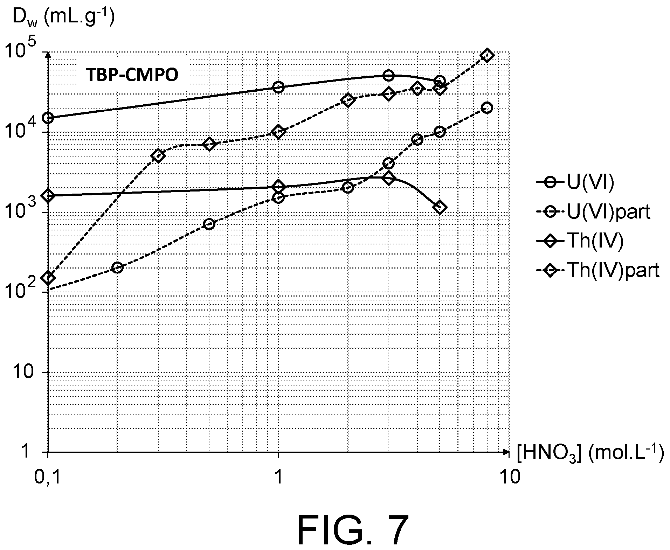

La figure 7 reproduit les courbes de la figure 4 relatives à l'évolution des coefficients de partage D_{w} de U(VI) et Th(IV) en fonction de la concentration molaire d'acide nitrique [HNO₃] des solutions aqueuses acides S et intègre des courbes relatives à cette même évolution des coefficients de partage D_{w}, notés U(VI)part et Th(IV)part, tels qu'indiqués, dans l'art antérieur, pour des extractions, sur des phases stationnaires commercialement disponibles et imprégnées d'un mélange TBP-CMPO, de solutions aqueuses acides comprenant des radionucléides U(VI) et Th(IV) et des concentrations variables d'acide nitrique.

### EXPOSÉ DÉTAILLÉ DE MODES DE RÉALISATION PARTICULIERS

### 1. Préparation de phases stationnaires monolithiques à base de méthacrylates

### 1.1. Préparation des compositions polymérisables

Deux compositions polymérisables ont été préparées à partir des composés suivants, dans les proportions massiques précisées ci-après :
- 6 mg (1 %mass) d'eau,
- 144 mg (24 %mass) de 1,4-butanediol,
- 210 mg (35 %mass) de 1-propanol,
- 144 mg (24 %mass) de diméthacrylate d'éthylène glycol (EGDMA),
- 96 mg (15 %mass) de méthacrylate d'allyle (AMA), et
- 6 mg (1 %mass) de 2,2-diméthoxy-2-phénylacétophénone (DMPA).

Dans un bécher de 1 mL, on a successivement introduit l'eau, le 1,4-butanediol, le 1-propanol, l'EGDMA, l'AMA puis la DMPA puis on a procédé au mélange de l'ensemble de ces composés.

### 1.2. Polymérisation en batch de la composition

La première composition polymérisable ainsi préparée a été placée dans un four sous un rayonnement ultraviolet (UV) d'une longueur d'onde de 360 nm pendant 10 min afin d'obtenir la polymérisation de cette composition.

Après les 10 min d'exposition aux UV, la phase stationnaire monolithique à base de méthacrylates obtenue est alors sortie du four, lavée au méthanol, plongée pendant 10 min dans un bain de méthanol puis égouttée.

La figure 1 illustre le cliché tel qu'obtenu au moyen d'un microscope électronique à balayage (MEB) de cette phase stationnaire monolithique ainsi préparée, ce cliché ayant été traité par le logiciel Image). On observe que la taille des nodules formant cette phase stationnaire monolithique est égale à 1,1 µm (± 0,07 µm).

### 1.3. Polymérisation in situ de la composition

La seconde composition polymérisable ainsi préparée a été introduite, à un débit de 1,2 mL/h et pendant 10 min, dans le microcanal d'un microsystème.

Le microcanal est en copolymère d'oléfines cycliques (COC) et présente un diamètre interne de 125 µm et une longueur de 2,5 cm.

Il est précisé que la surface interne de ce microcanal a préalablement fait l'objet d'un prétraitement d'ancrage.

La composition excédentaire est alors vidée pour ne laisser que la quantité nécessaire pour une polymérisation de la phase stationnaire monolithique dans le volume intérieur du microcanal du microsystème.

Le microsystème est ensuite placé dans le four sous un rayonnement UV d'une longueur d'onde de 360 nm pendant 10 min afin d'obtenir la polymérisation de la composition préparée conformément au protocole décrit au chapitre 1.1. ci-dessus.

On procède alors à un lavage de la phase stationnaire monolithique formée dans le microcanal par de l'éthanol que l'on fait circuler à travers le microcanal à un débit de à 0,3 mL/h, pendant 20 min.

### 2. Imprégnation de la phase stationnaire monolithique à base de méthacrylates

Pour l'étape d'imprégnation, chaque extractant, sous forme liquide, est mis en contact direct avec la phase stationnaire monolithique pendant une durée suffisante pour que l'extractant ait le temps de diffuser au sein des pores de cette phase stationnaire monolithique.

Trois extractants ont été testés :
- le phosphate de tri-*n*-butyle (TBP)seul,
- le diamylamyl phosphonate (DAAP), et
- un mélange de phosphate de tri-*n*-butyle (TBP) et d'oxyde d'octylphényl-N,N-diisobutylcarbamoylméthylphosphine (CMPO), avec TBP/CMPO tel que 75 %mass/25 mass.

Dans le cas du TBP, on a fait circuler le TBP pur dans la phase stationnaire monolithique pendant 2 h à un débit de 0,3 mL/h (5 µL/min). On a ensuite procédé à un rinçage de cette phase stationnaire monolithique imprégnée de TBP par une circulation, à un débit 1 mL/h (17 µL/min), d'eau distillée pendant 7 min.

Dans le cas du DAAP, on a fait circuler le DAAP pur dans la phase stationnaire monolithique pendant 2 h à un débit de 0,15 mL/h (2,5 µL/min). On a ensuite procédé à un rinçage de cette phase stationnaire monolithique imprégnée de DAAP par une circulation, à un débit 0,5 mL/h (8,5 µL/min), d'eau distillée pendant 7 min.

Dans le cas du mélange TBP-CMPO, on a fait circuler le mélange dans la phase stationnaire monolithique pendant 2 h à un débit de 0,15 mL/h (2,5 µL/min). On a ensuite procédé à un rinçage de cette phase stationnaire monolithique imprégnée du mélange TBP-CMPO par une circulation, à un débit 0,5 mL/h (8,5 µL/min), d'eau distillée pendant 7 min.

### 3. Caractérisation de la capacité d'échange et des coefficients de partage

Les propriétés d'extraction ont été évaluées par la mesure de la capacité d'échange et des coefficients de partage, par spectrométrie de masse à plasma à couplage inductif (en anglais, Inductively Coupled Plasma-Mass Spectrometry ou ICP-MS)
* La capacité d'échange, notée Cₑ et mesurée en mg U/g de phase stationnaire monolithique, a été déterminée à partir de la formule suivante : ${C}_{e} = \frac{{m}_{U}}{{m}_{monolithe}}$ avec
   - m_{U} =: masse d'uranyle U(VI) collecté après élution (en mg), et
   - mₘₒₙₒₗᵢₜₕₑ =: masse de phase stationnaire monolithique (en g).
* Les coefficients de partage, notés D_{w} et mesurés en mL/g, ont été déterminés à partir de la formule suivante : ${D}_{w} = \frac{{C}_{0} - {C}_{s}}{{C}_{s}} \times \frac{v}{{m}_{monolithe}}$ avec
   - C₀ =: concentration de l'élément considéré dans le volume v de solution aqueuse acide S initiale (en ppm),
   - Cₛ =: concentration de l'élément considéré dans le volume v de solution aqueuse acide S après extraction (éluat, en ppm),
   - v =: volume de solution qui a été en contact avec la phase stationnaire monolithique (en mL), et
   - mₘₒₙₒₗᵢₜₕₑ =: masse de phase stationnaire monolithique (en g).

Les coefficients de partage interviennent dans le calcul des facteurs de séparation des éléments.
* Le facteur de séparation de deux éléments A et B, noté FS_{A/B}, s'exprime à partir de la formule suivante : ${FS}_{A / B} = {D}_{w , A} / {D}_{w , B}$ avec
   - D_{w,A} =: coefficient de partage de l'élément A (en mL.g⁻¹), et
   - D_{w,B} =: coefficient de partage de l'élément B (en mL.g⁻¹).

### 3.1. Protocole de détermination de la capacité d'échange et résultats obtenus

* Dans le cas du TPB, on a procédé à un premier lavage de la phase stationnaire monolithique imprégnée de TBP par de l'acide nitrique (3 M, ou 3 mol/L) pendant 5 min à un débit de 0,75 mL/h (12,5 µL/min).

On a ensuite fait passer une solution contenant de l'uranyle à une concentration [U] = 15000 ppm pendant 2 h à un débit de 150 µL/h (2,5 µL/min).

On a alors procédé à un second lavage de la phase stationnaire monolithique imprégnée de TBP par de l'acide nitrique (3 M) pendant 30 min à un débit de 200 µL/h (3,3 µL/min), puis à une élution à l'acide nitrique (0,5 M) pendant 1 h à un même débit de 200 µL/h (3,3 µL/min).

Les fractions ainsi éluées dont été analysées par ICP-MS.

La capacité d'échange obtenue avec la phase stationnaire monolithique imprégnée de TBP est égale à 153 ± 18 mg U/g de phase stationnaire.
* Dans le cas du DAAP, on a procédé à un premier lavage de la phase stationnaire monolithique imprégnée de DAAP par de l'acide nitrique (3 M) pendant 5 min à un débit de 0,5 mL/h (8,5 µL/min).

On a ensuite fait passer une solution contenant de l'uranyle à une concentration [U] = 15000 ppm pendant 2 h à un débit de 150 µL/h (2,5 µL/min).

On a alors procédé à un second lavage de la phase stationnaire monolithique imprégnée de DAAP par de l'acide nitrique (3 M) pendant 30 min à un débit de 200 µL/h (3,3 µL/min), puis à une élution à l'acide chlorhydrique (0,1 M) pendant 4 h à un même débit de 200 µL/h (3,3 µL/min).

Les fractions ainsi éluées dont été analysées par ICP-MS.

La capacité d'échange obtenue avec la phase stationnaire monolithique imprégnée de DAAP est égale à 294 ± 4 mg U/g de phase stationnaire.
* Dans le cas du mélange TPB-CMPO, on a procédé à un premier lavage de la phase stationnaire monolithique imprégnée du mélange TBP-CMPO par de l'acide nitrique (3 M) pendant 5 min à un débit de 0, 5 mL/h (8,5 µL/min).

On a ensuite fait passer une solution contenant de l'uranyle à une concentration [U] = 15000 ppm pendant 2 h à un débit de 150 µL/h (2,5 µL/min).

On a alors procédé à un second lavage de la phase stationnaire monolithique imprégnée du mélange TBP-CMPO par de l'acide nitrique (3 M) pendant 30 min à un débit de 200 µL/h (3,3 µL/min), puis à une élution à l'acide chlorhydrique (0,1 M) pendant 4 h à un même débit de 200 µL/h (3,3 µL/min).

Les fractions ainsi éluées dont été analysées par ICP-MS.

La capacité d'échange obtenue avec la phase stationnaire monolithique imprégnée du mélange TBP-CMPO est égale à 149 ± 1 mg U/g de phase stationnaire.

### 3.2. Protocole de détermination des coefficients de partage et résultats obtenus

Les coefficients de partage D_{w} ont été déterminés pour les extractions conduites avec le TPB, le DAAP et le mélange TBP-CMPO selon le même protocole décrit ci-après.

Après un lavage de la phase stationnaire monolithique imprégnée de TBP, de DAAP ou du mélange TBP-CMPO, par des concentrations variables d'acide nitrique (0,1 M ; 1 M ; 3 M ou 5 M), pendant 5 min à un débit de 0,5 mL/h, (8 µL/min), on a fait passer une phase mobile formée par une solution aqueuse acide S pendant 2 h 30 à 100 µL/h (1,7 µL/min), cette solution aqueuse acide S comprenant :
- 10 ppm de chacun des 4 radionucléides que sont l'uranium(VI), le thorium(IV), l'europium(III) et le néodyme(III), soit [U] = [Th] = [Eu] = [Nd] = 10 ppm, et
- de l'acide nitrique à des concentrations variables (0,1 M ; 1 M ; 3 M ou 5 M).

Les éluats obtenus ont été analysés par ICP-MS.
* Les valeurs des coefficients de partage D_{w} obtenus pour l'extraction des différents radionucléides, en fonction de la concentration d'acide nitrique de la phase mobile S, avec la phase stationnaire monolithique imprégnée de TBP comme extractant, sont rassemblés dans le Tableau 1 ci-dessous et reportées sur les courbes de la figure 2.

**Tableau 1**

| [HNO₃] (en mol/L) | 0,1 | 1 | 3 | 5 |
|---|---|---|---|---|
| Radionucléide | D_{w} (mL/g) | | | |
| U(VI) | 2,9 ± 0,2 | 139,1 ± 1,3 | 9434 ± 900 | 1856 ± 17 |
| Th(IV) | 0,50 ± 0,01 | 5,2 ± 0,4 | 95,0 ± 0,9 | 297 ± 27 |
| Eu(III) | 0,01 ± 0,70 | 0,1 ± 0,70 | 1,4 ± 0,2 | 1,2 ± 0,2 |
| Nd(III) | 0,01 ± 0,70 | 0,01 ± 0,70 | 1,4 ± 0,2 | 0,60 ± 0,02 |

* Les valeurs des coefficients de partage D_{w} obtenus pour l'extraction des différents radionucléides, en fonction de la concentration d'acide nitrique de la phase mobile S, avec la phase stationnaire monolithique imprégnée de DAAP comme extractant, sont rassemblés dans le Tableau 2 ci-dessous et reportées sur les courbes de la figure 3.

**Tableau 2**

| [HNO₃] (en mol/L) | 0,1 | 1 | 3 | 5 |
|---|---|---|---|---|
| Radionucléide | D_{w} (mL/g) | | | |
| U(VI) | 106,4 ± 9,6 | 259,7 ± 23 | 200,8 ± 18 | 295 ± 27 |
| Th(IV) | 12,3 ± 1,1 | 2257 ± 203 | 9819 ± 884 | 18751 ± 1688 |
| Eu(III) | 0,87 ± 0,08 | 9,30 ± 0,8 | 10,0 ± 0,9 | 14,3 ± 1,3 |
| Nd(III) | 0,89 ± 0,08 | 6,20 ± 0,56 | 4,20 ± 0,38 | 9,30 ± 0,84 |

* Les valeurs des coefficients de partage D_{w} obtenus pour l'extraction des différents radionucléides, en fonction de la concentration d'acide nitrique de la phase mobile S, avec la phase stationnaire monolithique imprégnée du mélange TBP-CMPO comme extractant, sont rassemblés dans le Tableau 3 ci-dessous et reportées sur les courbes de la figure 4.

**Tableau 3**

| [HNO₃] (en mol/L) | 0,1 | 1 | 3 | 5 |
|---|---|---|---|---|
| Radionucléide | D_{w} (mL/g) | | | |
| U(VI) | 14865 ± 1338 | 36022 ± 3242 | 50265 ± 4524 | 42947 ± 3865 |
| Th(IV) | 1593 ± 143 | 2053 ± 185 | 2636 ± 237 | 1141 ± 103 |
| Eu(III) | 56,4 ± 5,1 | 100,0 ± 9,0 | 120 ± 11 | 171 ± 15 |
| Nd(III) | 123 ± 12 | 140 ± 13 | 150 ± 14 | 164 ± 15 |

### 3.3. Comparaison avec des phases stationnaires commercialement disponibles

Dans le Tableau 4 ci-dessous, on a reporté les valeurs de capacités d'échange obtenues pour les extractions conduites avec la phase stationnaire monolithique imprégnée de TBP, de DAAP ou du mélange TBP-CMPO, ainsi que les valeurs de capacités d'échange telles qu'indiquées pour des extractions conduites avec des phases stationnaires imprégnées par ces mêmes extractants (dans les mêmes proportions massiques dans le cas du mélange TBP-CMPO) et que commercialise la société Triskem, en référence aux informations figurant dans les Fiches Produits, respectivement référencées **[2] ,[3]** et **[4]** et disponibles sur Internet, aux adresses suivantes :
- *http:*//*www.triskem-international.com*/*iso_album*/*ft_resine_tbp_en_141126.pdf,*
- *http:*//*www.triskem-international.com*/*fr*/*iso_album*/*ft_resine_uteva_fr_160927.pdf,* et
- *http:*//*www.triskem-international.com*/*iso_album*/*f+t_resine_tr_en_161007.pdf.*

Ces phases stationnaires commercialement disponibles ne sont pas des phases stationnaires monolithiques mais des phases stationnaires particulaires.

**Tableau 4**

| Phase stationnaire | Particulaire | Selon l'invention | Particulaire | Selon l'invention | Particulaire | Selon l'invention |
|---|---|---|---|---|---|---|
| Extractant imprégné | TBP | | DAAP | | TBP-CMPO | |
| Capacité d'échange (en mgU/g de phase stationnaire monolithique) | 75 | 153 | 100 | 294 | | 149 |

Les valeurs des capacités d'échange obtenues avec la mise en œuvre des phases stationnaires monolithiques conformes à l'invention sont supérieures à celles obtenues avec les phases stationnaires particulaires imprégnées. Cela présente un avantage car des échantillons contenant une concentration de radionucléides à séparer plus importante pourront être traités par des microsystèmes chromatographiques comprenant des phases stationnaires monolithiques selon l'invention tout en bénéficiant des apports de la miniaturisation.

Sur la figure 5 sont reportées les courbes de la figure 2 relatives aux valeurs des coefficients de partage D_{w} obtenues pour U(VI) et Th(IV) en fonction de la concentration d'acide nitrique de la phase mobile S, pour les extractions conduites avec la phase stationnaire monolithique conforme à l'invention et imprégnée de TBP, ainsi que les courbes traduisant les valeurs des coefficients de partage D_{w} telles qu'indiquées, dans la publication **[2],** pour U(VI)part et Th(IV)part lors d'extractions conduites avec des phases stationnaires particulaires imprégnées de TBP.

L'étude des courbes de la figure 5 montre que les coefficients de partage D_{w} obtenus pour U(VI) et Th(IV) lors des extractions conduites avec la phase stationnaire monolithique conforme à l'invention et imprégnée de TBP sont supérieurs à ceux obtenus pour les extractions conduites avec la phase stationnaire particulaire imprégnée de TBP, avec un facteur d'au moins 10 dès lors que la concentration d'acide nitrique est supérieure ou égale à 1 mol/L ([HNO₃] ≥ 1 M).

Sur la figure 6 sont reportées les courbes de la figure 3 relatives aux valeurs valeurs des coefficients de partage D_{w} obtenues pour U(VI) et Th(IV) en fonction de la concentration d'acide nitrique de la phase mobile S, pour les extractions conduites avec la phase stationnaire monolithique conforme à l'invention et imprégnée de DAAP, ainsi que les courbes traduisant les valeurs des coefficients de partage D_{w} telles qu'indiquées, dans la publication **[3],** pour U(VI)part et Th(IV)part lors d'extractions conduites avec des phases stationnaires particulaires imprégnées de DAAP.

On observe que les coefficients de partage de Th(IV) qui ont été obtenus pour les extractions conduites avec la phase stationnaire monolithique conforme à l'invention et imprégnée de DAAP sont également supérieurs à ceux obtenus pour les extractions conduites avec la phase stationnaire particulaire imprégnée de DAAP, et ce pour pratiquement toute concentration d'acide nitrique.

Sur la figure 7 sont reportées les courbes de la figure 4 relatives aux valeurs valeurs des coefficients de partage D_{w} obtenues pour U(VI) et Th(IV) en fonction de la concentration d'acide nitrique de la phase mobile S, pour les extractions conduites avec la phase stationnaire monolithique conforme à l'invention et imprégnée du mélange TBP-CMPO, ainsi que les courbes traduisant les valeurs des coefficients de partage D_{w} telles qu'indiquées, dans la publication **[4],** pour U(VI)part et Th(IV)part lors d'extractions conduites avec des phases stationnaires particulaires imprégnées du mélange TBP-CMPO.

Là encore, on observe que les coefficients de partage de U(VI) qui ont été obtenus pour les extractions conduites avec la phase stationnaire monolithique conforme à l'invention et imprégnée du mélange TBP-CMPO sont également supérieurs à ceux obtenus pour les extractions conduites avec la phase stationnaire particulaire imprégnée du même mélange, et ce pour toute concentration d'acide nitrique.

Quel que soit l'extractant considéré, qu'il s'agisse de TBP, de DAAP ou du mélange TBP-CMPO, on observe que la relation FS_{A/B} = D_{w,A} / D_{w,B}, qui permet d'établir les facteurs de séparation, se traduit graphiquement par un espace entre les courbes d'évolution des D_{w} en fonction de la concentration d'acide nitrique. On observe que les courbes D_{w,U} et D_{w,Th} sont plus espacées pour les extractions conduites avec la phase stationnaire monolithique selon l'invention et imprégnée de TBP, de DAAP ou du mélange TBP-CMPO que pour les extractions conduites avec les phases stationnaires particulaires respectivement imprégnées par ces mêmes extractants.

Le facteur de séparation de ces deux éléments, U et Th, est supérieur avec le microsystème chromatographique de l'invention.

### BIBLIOGRAPHIE

**[1]** E.P. Horwitz et al., Analytica Chimica Acta, 1993, 281, pages 361-372
**[2] Fiche Produit *"TBP Resin"* de la société Triskem disponible à l'adresse *http:*//*triskem-international.com*/*iso_album*/*ft_resine_tbp_en_141126.pdf***
**[3] Fiche Produit *"UTEVA Resin"* de la société Triskem disponible à l'adresse *http:*//*www.triskem-international.com*/*fr*/*iso_album*/*ft_resine_uteva_fr_160927.pdf***
**[4] Fiche Produit *"TRU Resin"* de la société Triskem disponible à l'adresse *http:*//*www.triskem-international.com*/*iso_album*/*ft_resine_tr_en_161007.pdf***

## Revendications

1. Procédé de fabrication d'une colonne de chromatographie d'extraction, ce procédé comprenant les étapes (1) et (2) suivantes :
(1) une préparation d'une phase stationnaire monolithique dans le volume intérieur de la colonne par la mise en œuvre des étapes (a) à (c) suivantes :
(a) la préparation d'une composition polymérisable comprenant :
- un premier monomère (méth)acrylate choisi parmi le diméthacrylate d'éthylène glycol, le diacrylate de 1,4-butanediol, le diméthacrylate de triéthylène glycol et le triméthacrylate de triméthylolpropane, ce premier monomère étant avantageusement le diméthacrylate d'éthylène glycol,
- un deuxième monomère méth(acrylate) choisi parmi le méthacrylate d'allyle, le méthacrylate de glycidyle, le méthacrylate de lauryle, le méthacrylate de butyle, le méthacrylate de 2-hydroxyéthyle, le di(méth)acrylate de polyéthylène glycol, le méthacrylate de glycidyle et de bisphénol A et l'acrylate d'hexyle, ce deuxième monomère étant avantageusement le méthacrylate d'allyle,
- un ou plusieurs agents porogènes, et
- un amorceur radicalaire,
(b) l'introduction de la composition polymérisable dans le volume intérieur de la colonne, et
(c) la polymérisation de la composition polymérisable, moyennant quoi on obtient une phase stationnaire monolithique dans le volume intérieur de la colonne ; et
(2) une mise en contact de la phase stationnaire monolithique préparée à l'étape (1) avec une phase constituée par un extractant ou par un mélange d'extractants, l'extractant ou le mélange d'extractants se présentant sous forme liquide, moyennant quoi on obtient l'imprégnation, par le ou les extractants, de la phase stationnaire monolithique,
l'extractant étant choisi parmi le phosphate de tri-*n*-butyle, l'oxyde d'octylphényl-*N,N-*diisobutylcarbamoylméthylphosphine, le diamylamyl phosphonate, le p-amino-N,N-dihexyl acétamide, l'acide alpha-hydroxyisobutyrique, le di-bis-(2-éthylhexyl)malonamide, le di-2-éthyhexyl acétylamide, le di-2-éthylhexyl butyramide, le di-2-éthyhexyl isobutyramide, le diglycolamide, l'acide di-isodécylphosphorique, le N,N'-diméthyl-N,N'-dibutyl tétradécyl malonamide, le N,N'-diméthyl-N,N'-dioctyl-2-(2-hexyloxy-éthyl)-malonamide, le 4-éthoxy-N,N-dihexyl-butanamide, l'acide bis-2-éthylhexyl phosphorique, l'acide N-(2-hydroxyéthyl)-éthylènediamine triacétique, le N,N,N',N'-tétra-2-éthylhexyl diglycolamide, le tripodal diglycolamide, le N,N,N',N'-tétraoctyl diglycolamide, les phosphates de trialkyle, les éther-couronnes et les calixarènes, l'extractant étant, avantageusement, le phosphate de tri-n-butyle, le diamylamyl phosphonate ou un mélange le phosphate de tri-*n*-butyle et d'oxyde d'octylphényl-*N,N-*diisobutylcarbamoylméthylphosphine.

2. Procédé selon la revendication 1, dans lequel la proportion massique des premier et deuxième monomères (méth)acrylate, par rapport à la masse totale de la composition polymérisable, est comprise entre 20 %mass et 60 %mass et, avantageusement, entre 30 %mass et 50 %mass, la proportion massique du premier monomère (méth)acrylate et/ou la proportion massique du deuxième monomère (méth)acrylate, par rapport à la masse totale de la composition polymérisable, étant avantageusement comprise entre 10 %mass et 30 %mass.

3. Procédé selon la revendication 1 ou 2, dans lequel la proportion massique du ou des agents porogènes, par rapport à la masse totale de la composition polymérisable, est comprise entre 40 %mass et 80 %mass et, avantageusement, entre 50 %mass et 70 %mass.

4. Procédé selon l'une quelconque des revendications 1 à 3, dans lequel la composition polymérisable comprend deux agents porogènes, de préférence un monoalcool et un diol, le monoalcool étant par exemple choisi parmi le méthanol, le 1-propanol, le 2-propanol, le cyclohexanol et le dodécanol, le monoalcool étant, de préférence, le 1-propanol et le diol étant par exemple choisi parmi le 1,3-propanediol, le 1,4-butanediol, le 1,5-pentanediol et le 1,6-hexanediol, le diol étant, de préférence, le 1,4-butanediol.

5. Procédé selon la revendication 4, dans lequel la proportion massique du monoalcool, par rapport à la masse totale de la composition polymérisable, est comprise entre 25 %mass et 45 %mass et, avantageusement, entre 30 %mass et 50 %mass et/ou la proportion massique du diol, par rapport à la masse totale de la composition polymérisable, est comprise entre 15 %mass et 35 %mass et, avantageusement, entre 20 %mass et 30 %mass.

6. Procédé selon la revendication 4, dans lequel la composition polymérisable comprend, en outre, de l'eau, dans une proportion massique, par rapport à la masse totale de la composition polymérisable, allant jusqu'à 15 %mass et étant avantageusement comprise entre 1 %mass et 12 %mass, la proportion massique du ou des diols et de l'eau, par rapport à la masse totale de la composition polymérisable, étant comprise entre 15 %mass et 35 %mass et, avantageusement, entre 20 %mass et 30 %mass.

7. Procédé selon l'une quelconque des revendications 1 à 6, dans lequel l'amorceur radicalaire est choisi parmi la 2,2-diméthoxy-2-phénylacétophénone, la 2,2-diéthoxyacétophénone, les *α*-dialkoxyacétophénones, la 2,2-diméthyl-2-hydroxyacétophénone, les *α*-hydroxyacétophénones, le benzoïne méthyl éther, la 2-méthyl-4'-(méthylthio)-2-morpholino-propiophénone et les *α*-alkylaminoacétophénones, l'amorceur radicalaire étant, de préférence, la 2,2-diméthoxy-2-phénylacétophénone.

8. Procédé selon l'une quelconque des revendications 1 à 7, dans lequel l'étape (c) de polymérisation de la composition polymérisable est réalisée par irradiation au moyen de rayons ultraviolets, le temps d'irradiation étant avantageusement compris entre 5 min et 30 min.

9. Procédé selon l'une quelconque des revendications 1 à 8, dans lequel le diamètre interne de la colonne est inférieur ou égal à 5 mm, avantageusement inférieur ou égal à 1 mm, de préférence compris entre 50 µm et 500 µm et, plus préférentiellement, entre 50 µm et 360 µm.

10. Procédé selon l'une quelconque des revendications 1 à 9, dans lequel la paroi interne de la colonne est soumise à un prétraitement apte à créer ou à renforcer l'adhérence de la phase stationnaire monolithique sur la paroi interne, ce prétraitement étant réalisé préalablement à l'étape (b).

11. Procédé selon l'une quelconque des revendications 1 à 10, dans lequel l'étape (2) de mise en contact est réalisée par une circulation d'une phase mobile constituée par le ou les extractants sur la phase stationnaire monolithique, par exemple à un débit compris entre 0,1 mL/h et 1 mL/h et/ou pendant un temps compris entre 1 h et 8 h.

12. Procédé d'extraction d'éléments d'une solution aqueuse acide S, notamment d'une solution aqueuse acide S comprenant notamment de l'acide nitrique, de l'acide chlorhydrique ou de l'acide perchlorique, ce procédé comprenant :
(i) au moins une circulation d'une phase mobile constituée par la solution aqueuse acide S sur la phase stationnaire monolithique imprégnée d'une colonne de chromatographie d'extraction fabriquée par la mise en œuvre du procédé selon l'une quelconque des revendications 1 à 11, puis
(ii) au moins une élution, par une phase mobile constituée par une solution aqueuse éluante, de la phase stationnaire monolithique obtenue à l'issue de l'étape (i), moyennant quoi tout ou partie des éléments sont récupérés dans la solution aqueuse éluante.

13. Procédé d'extraction selon la revendication 12, dans lequel la solution aqueuse S présente une concentration d'ions H⁺ inférieure ou égale à 10 mol/L, avantageusement comprise entre 0,1 mol/L et 8 mol/L et, de préférence, comprise entre 1 mol/L et 6 mol/L.

14. Procédé d'extraction selon la revendication 12 ou 13, dans lequel, les éléments étant des actinides et/ou des lanthanides, les actinides sont choisis parmi l'uranium(VI), le thorium(IV), le curium (III), l'américium (III), le plutonium (III, IV, VI) et le neptunium (IV, V) et/ou les lanthanides sont choisis parmi l'europium(III), le néodyme(III), le cérium(III, IV), le lanthane(III), le dysprosium(III), l'erbium(III), le gadolinium(III), l'holmium(III), le lutécium(III), le praséodyme(Ill), le prométhéum(III), le samarium(III), le terbium(III), le thulium(III) et l'ytterbium(III).

## Patentansprüche

1. Verfahren zur Herstellung einer Extraktionschromatographiesäule, wobei dieses Verfahren die folgenden Schritte (1) und (2) umfasst:
(1) Vorbereiten einer monolithischen stationären Phase im Innenvolumen der Säule durch die Durchführung der folgenden Schritte (a) bis (c):
(a) Vorbereiten einer polymerisierbaren Zusammensetzung, umfassend:
- ein erstes (Meth)acrylat-Monomer, ausgewählt aus Ethylenglykoldimethacrylat, 1,4-Butandioldiacrylat, Triethylenglykoldimethacrylat und Trimethylolpropantrimethacrylat, wobei dieses erste Monomer vorteilhafterweise Ethylenglykoldimethacrylat ist,
- ein zweites Meth(acrylat)-Monomer, ausgewählt aus Allylmethacrylat, Glycidylmethacrylat, Laurylmethacrylat, Butylmethacrylat, 2-Hydroxyethylmethacrylat, Polyethylenglykoldi(meth)acrylat, Bisphenol-A-Glycidylmethacrylat und Hexylacrylat, wobei dieses zweite Monomer vorteilhafterweise Allylmethacrylat ist,
- ein oder mehrere porogene Mittel, und
- einen Radikalstarter,
(b) Einbringen der polymerisierbaren Zusammensetzung in das Innenvolumen der Säule, und
(c) Polymerisieren der polymerisierbaren Zusammensetzung, wodurch eine monolithische stationäre Phase im Innenvolumen der Säule erhalten wird; und
(2) Inkontaktbringen der in Schritt (1) vorbereiteten monolithischen stationären Phase mit einer Phase, die aus einem Extraktionsmittel oder einer Mischung aus Extraktionsmitteln besteht, wobei das Extraktionsmittel oder die Mischung aus Extraktionsmitteln in flüssiger Form vorliegt, wodurch die Imprägnierung der monolithischen stationären Phase durch das/die Extraktionsmittel erhalten wird,
wobei das Extraktionsmittel ausgewählt ist aus Tri-n-butylphosphat, Octylphenyl-*N*,*N-*diisobutylcarbamoylmethylphosphinoxid, Diamylamylphosphonat, p-Amino-N,N-dihexylacetamid, Alpha-Hydroxyisobuttersäure, Di-bis-(2-ethylhexyl)malonamid, Di-2-ethyhexylacetylamid, Di-2-Ethylhexylbutyramid, Di-2-Ethyhexylisobutyramid, Diglycolamid, Diisodecylphosphorsäure, N,N'-Dimethyl-N,N'-dibutyltetradecylmalonamid, N,N'-Dimethyl-N,N'-dioctyl-2-(2-hexyloxyethyl)-malonamid, 4-Ethoxy-N,N-dihexylbutanamid, Bis-2-ethylhexylphosphorsäure, N-(2-Hydroxyethyl)-ethylendiaminetriessigsäure, N,N,N',N'-Tetra-2-ethylhexyldiglycolamid, Tripodal-Diglycolamid, N,N,N',N'-Tetraoctyldiglycolamid, Trialkylphosphaten, Kronenether und Calixarene, wobei das Extraktionsmittel vorteilhafterweise Tri-n-butylphosphat, Diamylamylphosphonat oder eine Mischung aus Tri-*n*-butylphosphat und Octylphenyl-*N*,*N-*diisobutylcarbamoylmethylphosphinoxid ist.

2. Verfahren nach Anspruch 1, wobei der Massenanteil des ersten und des zweiten (Meth)acrylat-Monomers, bezogen auf die Gesamtmasse der polymerisierbaren Zusammensetzung, zwischen 20 Masse-% und 60 Masse-% und vorteilhafterweise zwischen 30 Masse-% und 50 Masse-% liegt, wobei der Massenanteil des ersten (Meth)acrylat-Monomers und/oder der Massenanteil des zweiten (Meth)acrylat-Monomers, bezogen auf die Gesamtmasse der polymerisierbaren Zusammensetzung, vorteilhafterweise zwischen 10 Masse-% und 30 Masse-% liegt.

3. Verfahren nach Anspruch 1 oder 2, wobei der Massenanteil des oder der porogenen Mittel, bezogen auf die Gesamtmasse der polymerisierbaren Zusammensetzung, zwischen 40 Masse-% und 80 Masse-% und vorteilhafterweise zwischen 50 Masse-% und 70 Masse-% liegt.

4. Verfahren nach einem der Ansprüche 1 bis 3, wobei die polymerisierbare Zusammensetzung zwei porogene Mittel, vorzugsweise einen einwertigen Alkohol und ein Diol, umfasst, wobei der einwertige Alkohol beispielsweise aus Methanol, 1-Propanol, 2-Propanol, Cyclohexanol und Dodecanol ausgewählt ist, wobei der einwertige Alkohol vorzugsweise 1-Propanol ist und das Diol beispielsweise aus 1,3-Propandiol, 1,4-Butandiol, 1,5-Pentandiol und 1,6-Hexandiol ausgewählt ist, wobei das Diol vorzugsweise 1,4-Butandiol ist.

5. Verfahren nach Anspruch 4, wobei der Massenanteil des einwertigen Alkohols, bezogen auf die Gesamtmasse der polymerisierbaren Zusammensetzung, zwischen 25 Masse-% und 45 Masse-% und vorteilhafterweise zwischen 30 Masse-% und 50 Masse-% liegt und/oder der Massenanteil des Diols, bezogen auf die Gesamtmasse der polymerisierbaren Zusammensetzung, zwischen 15 Masse-% und 35 Masse-% und vorteilhafterweise zwischen 20 Masse-% und 30 Masse-% liegt.

6. Verfahren nach Anspruch 4, wobei die polymerisierbare Zusammensetzung ferner Wasser in einem Massenanteil, bezogen auf die Gesamtmasse der polymerisierbaren Zusammensetzung, von bis zu 15 Masse-% und vorteilhafterweise zwischen 1 Masse-% und 12 Masse-% umfasst, wobei der Massenanteil des bzw. der Diole und des Wassers, bezogen auf die Gesamtmasse der polymerisierbaren Zusammensetzung, zwischen 15 Masse-% und 35 Masse-% und vorteilhafterweise zwischen 20 Masse-% und 30 Masse-% liegt.

7. Verfahren nach einem der Ansprüche 1 bis 6, wobei der Radikalstarter aus 2,2-Dimethoxy-2-phenylacetophenon, 2,2-Diethoxyacetophenon, α-Dialkoxyacetophenonen, 2,2-Dimethyl-2-hydroxyacetophenon, α-Hydroxyacetophenonen, Benzoinmethylether, 2-Methyl-4'-(methylthio)-2-morpholinopropiophenon und α-Alkylaminoacetophenonen ausgewählt ist, wobei der Radikalstarter vorzugsweise 2,2-Dimethoxy-2-phenylacetophenon ist.

8. Verfahren nach einem der Ansprüche 1 bis 7, wobei der Schritt (c) des Polymerisierens der polymerisierbaren Zusammensetzung durch Bestrahlung mittels ultravioletter Strahlung durchgeführt wird, wobei die Bestrahlungszeit vorteilhafterweise zwischen 5 min und 30 min liegt.

9. Verfahren nach einem der Ansprüche 1 bis 8, wobei der Innendurchmesser der Säule kleiner oder gleich 5 mm, vorteilhafterweise kleiner oder gleich 1 mm ist, vorzugsweise zwischen 50 µm und 500 µm und, besonders bevorzugt zwischen 50 µm und 360 µm, liegt.

10. Verfahren nach einem der Ansprüche 1 bis 9, wobei die Innenwand der Säule einer Vorbehandlung unterzogen wird, die geeignet ist, die Haftung der monolithischen stationären Phase an der Innenwand zu erzeugen oder zu verstärken, wobei diese Vorbehandlung vor Schritt (b) durchgeführt wird.

11. Verfahren nach einem der Ansprüche 1 bis 10, wobei der Schritt (2) des Inkontaktbringens durch Zirkulation einer mobilen Phase, die aus dem bzw. den Extraktionsmitteln besteht, mit der monolithischen stationären Phase, beispielsweise mit einer Flussrate zwischen 0,1 ml/h und 1 ml/h und/oder für eine Zeit zwischen 1 h und 8 h, durchgeführt wird.

12. Verfahren zur Extraktion von Elementen einer sauren wässrigen Lösung S, insbesondere einer sauren wässrigen Lösung S, umfassend insbesondere Salpetersäure, Salzsäure oder Perchlorsäure, wobei dieses Verfahren umfasst:
(i) mindestens eine Zirkulation einer mobilen Phase, die aus der wässrigen sauren Lösung S besteht, über die imprägnierte monolithische stationäre Phase einer Extraktionschromatographiesäule, die durch die Durchführung des Verfahrens nach einem der Ansprüche 1 bis 11 hergestellt wurde, und dann
(ii) mindestens eine Elution der am Ende des Schritts (i) erhaltenen monolithischen stationären Phase durch eine mobile Phase, die aus einer wässrigen Elutionslösung besteht, wodurch die Elemente ganz oder teilweise in der wässrigen Elutionslösung gewonnen werden.

13. Extraktionsverfahren nach Anspruch 12, wobei die wässrige Lösung S eine H⁺-Ionenkonzentration von 10 mol/l oder weniger aufweist, die vorteilhafterweise zwischen 0,1 mol/l und 8 mol/l und vorzugsweise zwischen 1 mol/l und 6 mol/l liegt.

14. Extraktionsverfahren nach Anspruch 12 oder 13, wobei die Elemente Actinide und/oder Lanthanide sind und die Actinide aus Uran(VI), Thorium(IV), Curium (III), Americium(III), Plutonium (III, IV, VI) und Neptunium (IV, V) ausgewählt sind und/oder die Lanthanide aus Europium(lll), Neodym(lll), Cer(lll, IV), Lanthan(lll), Dysprosium(lll), Erbium(lll), Gadolinium(lll), Holmium(lll), Lutetium(lll), Praseodym(lll), Promethium(lll), Samarium(lll), Terbium(lll), Thulium(lll) und Ytterbium(lll) ausgewählt sind.

## Claims

1. Method for manufacturing an extraction chromatography column, this method comprising the following steps (1) and (2) of:
(1) preparing a monolithic stationary phase in the internal volume of the column by implementing the following steps (a) to (c) of:
(a) preparing a polymerisable composition comprising:
- a first (meth)acrylate monomer selected from among ethylene glycol dimethacrylate, 1,4-butanediol diacrylate, triethylene glycol dimethacrylate and trimethylolpropane trimethacrylate, this first monomer advantageously being ethylene glycol dimethacrylate,
- a second meth(acrylate) monomer selected from among allyl methacrylate, glycidyl methacrylate, lauryl methacrylate, butyl methacrylate, 2-hydroxyethyl methacrylate, polyethylene glycol di(meth)acrylate, bisphenol A glycidyl methacrylate and hexyl acrylate, this second monomer advantageously being allyl methacrylate,
- one or more pore-forming agents, and
- a radical initiator,
(b) introducing the polymerisable composition into the internal volume of the column, and
(c) polymerising the polymerisable composition, thereby a monolithic stationary phase is obtained in the internal volume of the column; and
(2) placing the monolithic stationary phase prepared in step (1) in contact with a phase consisting of an extractant or a mixture of extractants, the extractant or the mixture of extractants being in liquid form, whereby the impregnation, by the extractant(s), of the monolithic stationary phase is obtained,
the extractant being selected from among tri-*n*-butyl phosphate, octylphenyl-*N*,*N*-diisobutylcarbamoylmethylphosphine oxide, diamylamyl phosphonate, p-amino-N,N-dihexyl acetamide, alpha-hydroxyisobutyric acid, di-bis-(2-ethylhexyl)malonamide, di-2-ethyhexyl acetylamide, di-2-ethylhexyl butyramide, di-2-ethylhexyl isobutyramide, diglycolamide, di-isodecylphosphoric acid, N,N'-dimethyl-N,N'-dibutyl tetradecyl malonamide, N,N'-dimethyl-N,N'-dioctyl-2-(2-hexyloxy-ethyl)-malonamide, 4-ethoxy-N,N-dihexyl-butanamide, bis-2-ethylhexyl phosphoric acid, N-(2-hydroxyethyl)-ethylenediamine triacetic acid, N,N,N',N'-tetra-2-ethylhexyl diglycolamide, tripodal diglycolamide, N,N,N',N'-tetraoctyl diglycolamide, trialkyl phosphates, crown ethers and calixarenes, the extractant being, advantageously, tri-n-butyl phosphate, diamylamyl phosphonate or a mixture of tri-*n*-butyl phosphate and octylphenyl-*N*,*N-*diisobutylcarbamoylmethylphosphine oxide.

2. Method according to claim 1, wherein the mass proportion of the first and second (meth)acrylate monomers, relative to the total mass of the polymerisable composition, is between 20 wt% and 60 wt% and, advantageously, between 30 wt% and 50 wt%, the mass proportion of the first (meth)acrylate monomer and/or the mass proportion of the second (meth)acrylate monomer, relative to the total mass of the polymerisable composition, advantageously being between 10 wt% and 30 wt%.

3. Method according to claim 1 or 2, wherein the mass proportion of the pore-forming agent(s), relative to the total mass of the polymerisable composition, is between 40 wt% and 80 wt% and, advantageously, between 50 wt% and 70 wt%.

4. Method according to any one of claims 1 to 3, wherein the polymerisable composition comprises two pore-forming agents, preferably a monoalcohol and a diol, the monoalcohol being for example selected from among methanol, 1-propanol, 2-propanol, cyclohexanol and dodecanol, the monoalcohol being, preferably, 1-propanol and the diol being for example selected from among 1,3-propanediol, 1,4-butanediol, 1,5-pentanediol and 1,6-hexanediol, the diol being preferably 1,4-butanediol.

5. Method according to claim 4, wherein the mass proportion of the monoalcohol, relative to the total mass of the polymerisable composition, is between 25 wt% and 45 wt% and, advantageously, between 30 wt% and 50 wt% and/or the mass proportion of the diol, relative to the total mass of the polymerisable composition, is between 15 wt% and 35 wt% and, advantageously, between 20 wt% and 30 wt%.

6. Method according to claim 4, wherein the polymerisable composition further comprises water, in a mass proportion, relative to the total mass of the polymerisable composition, ranging up to 15 wt% and advantageously being between 1 wt% and 12 wt%, the mass proportion of the diol(s) and water, relative to the total mass of the polymerisable composition, being between 15 wt% and 35 wt% and, advantageously, between 20 wt% and 30 wt%.

7. Method according to any one of claims 1 to 6, wherein the radical initiator is selected from among 2,2-dimethoxy-2-phenylacetophenone, 2,2-diethoxyacetophenone, α-dialkoxyacetophenones, 2,2-dimethyl-2-hydroxyacetophenone, α-hydroxyacetophenones, benzoine methyl ether, 2-methyl-4'-(methylthio)-2-morpholino-propiophenone, and α-alkylaminoacetophenones, the radical initiator being, preferably, 2,2-dimethoxy-2-phenylacetophenone.

8. Method according to any one of claims 1 to 7, wherein the step (c) of polymerising the polymerisable composition is carried out by irradiation by means of ultraviolet rays, the irradiation time advantageously being between 5 min and 30 min.

9. Method according to any one of claims 1 to 8, wherein the inner diameter of the column is less than or equal to 5 mm, advantageously less than or equal to 1 mm, preferably between 50 µm and 500 µm and, more preferably, between 50 µm and 360 µm.

10. Method according to any one of claims 1 to 9, wherein the inner wall of the column is subjected to a pretreatment capable of creating or strengthening the adhesion of the monolithic stationary phase to the inner wall, this pretreatment being performed prior to step (b).

11. Method according to any one of claims 1 to 10, wherein the contacting step (2) is carried out by circulating a mobile phase consisting of the extractant(s) on the monolithic stationary phase, for example at a flow rate between 0.1 mL/h and 1 mL/h and/or for a time between 1 h and 8 h.

12. Method for extracting elements from an acidic aqueous solution S, in particular from an acidic aqueous solution S comprising in particular nitric acid, hydrochloric acid or perchloric acid, this method comprising:
(i) at least one circulation of a mobile phase consisting of the aqueous acid solution S on the impregnated monolithic stationary phase of an extraction chromatography column manufactured by implementing the method according to any one of claims 1 to 11, then
(ii) at least one elution, by a mobile phase consisting of an eluent aqueous solution, of the monolithic stationary phase obtained at the end of step (i), whereby all or part of the elements are recovered in the eluent aqueous solution.

13. Extraction method according to claim 12, wherein the aqueous solution S has a concentration of H⁺ ions less than or equal to 10 mol/L, advantageously between 0.1 mol/L and 8 mol/L and, preferably, between 1 mol/L and 6 mol/L.

14. Extraction method according to claim 12 or 13, wherein, the elements being actinides and/or lanthanides, the actinides are selected from among uranium(VI), thorium(IV), curium (III), americium (III), plutonium (III, IV, VI) and neptunium (IV, V) and/or the lanthanides are selected from among europium(lll), neodymium(lll), cerium(lll, IV), lanthanum(lll), dysprosium(lll), erbium(lll), gadolinium(lll), holmium(lll), lutetium(lll), praseodymium(lll), promethium(lll), samarium(lll), terbium(lll), thulium(lll) and ytterbium(lll).
